# FASCICULE DE BREVET EUROPEEN

(11) **EP 1 591 190 B1**
(45) Date de publication et mention de la délivrance du brevet: **16.06.2010**
(21) Numéro de dépôt: 05300345.5
(22) Date de dépôt: 29.04.2005
(51) Int. Cl.: B23K 26/38

(54) **Procédé de soudure de deux tôles métalliques**
Verfahren zum Verschweissen zweier Metallbleche
Method for welding two metal sheets

(30) Priorité: 29.04.2004 FR 0404619
(43) Date de publication de la demande: 02.11.2005
(73) Titulaire: Siemens VAI Metals Technologies SAS, 42403 Saint Chamond (FR)
(72) Inventeur: Gobez, Pascal, 42340 Veauche (FR); Barjon, Stéphane, 42210 Montrond les Bains (FR)
(74) Mandataire: Fischer, Michael

(56) Documents cités:
- EP-A- 0 534 704
- US-A- 4 626 651
- US-A- 4 854 493

## Description

La présente invention se rapporte à un procédé de soudage en bout de deux tôles métalliques au moyen d'un faisceau laser. Elle s'applique particulièrement au soudage pratiqué pour le raccordement de bobines de tôles entre elles à l'entrée des installation s de traitement en ligne continue utilisées dans l'industrie sidérurgique.

En effet les lignes de fabrication, de transformation et de revêtement des aciers sont aujourd'hui conçues pour un fonctionnement en continu, plusieurs traitements étant couplés entre eux de manière à pouvoir s'enchaîner sans avoir à fabriquer des bobines intermédiaires ce qui est générateur de pertes de temps et de mise au mille pour le matériau.

Pour cela, de telles installations comportent, dans leur section d'entrée, une section de raccordement des bobines par soudage. Il existe différents moyens pour réaliser ces soudures, mais d'une manière générale, une section de soudage doit répondre aux problèmes spécifiques que pose le raccordement des bobines.

Généralement une soudeuse comporte deux organes de serrage à deux mors, destinés à immobiliser les tôles, l'un, situé en aval dans le sens de défilement de la bande, pour immobiliser la queue de la bande appartenant à la bobine qui a été introduite dans la ligne, l'autre, en amont, pour immobiliser la tête de la bande appartenant à la bobine que l'on veut introduire en la raccordant à la précédente.

Divers dispositifs de centrage permettent d'aligner les tôles des deux bobines avant leur serrage entre les mors. Les soudeuses comportent aussi généralement des cisailles intégrées permettant de réaliser des coupes précises et propres des extrémités des bandes à raccorder et dont le rôle est primordial sur la qualité de la soudure réalisée et sur l'épaisseur du cordon de soudure obtenu.

De manière connue et de la façon qui est la plus répandue, la coupe finale de préparation des extrémités des bandes se fait dans les machines de soudage. Les tôles sont immobilisées dans les mors de serrage en dépassant de ceux-ci pour laisser la possibilité de la coupe des extrémités à une cote précise, en réalisant un léger porte -à-faux de chaque tôle par rapport aux bords des mors qui l'immobilisent. En effet, pour une bonne tenue des extrémités des tôles, sans déformation, les mors sont des pièces métalliques massives qui risquent d'absorber la chaleur de toute source d'énergie placée trop près et il ne faut donc pas réaliser le soudage trop près du mors.

Selon le type de traitement qui a lieu sur la ligne, l'épaisseur du cordon de soudure est u n paramètre important à prendre en compte, cette épaisseur pouvant être de la même valeur que celle des tôles à raccorder, ou de valeur différente, et une surépaisseur peut être tolérée ou non.

En principe, il serait préférable de réaliser une soudure avec une surépaisseur car cela est un gage de la solidité de la soudure, et les lignes de traitement n'acceptent pas les ruptures de soudure qui obligent à des arrêts prolongés pour remettre les installations en ordre de marche.

Toutefois, les divers procédés mis en oeuvre ne permettent pas tous de tolérer les surépaisseurs.

En particulier, les lignes de décapage, qui, actuellement, sont généralement couplées aux lignes de laminage, ou les lignes de laminage continu, comportent en général, dans leur section d'entrée, une soudeuse en bout par étincelage, et la soudure brute générée présente un bourrelet irrégulier qui peut endommager les rouleaux de support de bande situés dans la ligne et de provoquer une rupture lors du passage entre les cylindres du laminoir . La machine est donc équipée d'un dispositif de rabotage ou meulage permettant de réduire le bourrelet à une cote éventuellement inférieure à celle de l'épaisseur des tôles raccordées. Mais un tel usinage par rabotage risque de fragiliser la soudure, en particulier si le dispositif de rabotage est désaligné ou si les outils ont été endommagés.

Dans d'autres lignes, la soudeuse utilisée est du type à molettes, la soudure étant réalisée par recouvrement partiel des deux tôles. De telles soudures sont écrasées lors de leur réalisation par les molettes de soudage elles-mêmes et par des galets spécialement conçus à cet effet. Malgré les précautions prises on réalise une soudure dont la surépaisseur atteint environ 10% de l'épaisseur des tôles lorsque celle -ci est de l'ordre de 0,3 millimètre à 1 millimètre, et peut atteindre beaucoup plus pour des tôles très fines dont l'épaisseur peut être de l'ordre de 0,15 millimètre. De telles surépaisseurs sont tolérées dans les lignes possédant un laminoir skin pass par exemple, mais elles ne sont pas acceptables dans d'autres cas, comme sur des tôles galvanisées brillantes, où la surépaisseur risque de s'imprimer dans la bobine à la sortie de la ligne et pourra marquer la tôle sur plusieurs spires.

On a aussi utilisé d'autres techniques comme le plasma, le micro plasma et le laser pour réaliser des soudures de raccordement de bobines. La soudure au plasma a pour inconvénient d'élargir la zone affectée thermiquement et de durcir le métal dans cette zone, rendant la soudure plus fragile, mais cet inconvénient a été résolu dans le soudage par micro plasma qui est utilisé pour les tôles de très faible épaisseur. Ce procédé s'est cependant surtout répandu pour le soudage de pièces de petites dimensions et non pour le soudage de tôles de grande largeur.

Le soudage par laser résout en principe ces problèmes car il permet de réduire la zone affectée thermiquement, mais il exige une très bonne précision de coupe. En effet, compte tenu du très faible diamètre du faisceau, si les tôles ne sont pas rigoureusement jointives le chauffage ne se produira pas ou mal et la soudure sera de mauvaise qualité.

C'est ainsi que, dans le document US -4626651, l'intervalle maximum entre les extrémités des bandes évalué sur toute la largeur de ces dernières est minimisé d'abord avant l'opération de coupe, en choisissant une longueur de porte à faux et un angle de coupe adaptés en fonction de l'épaisseur des bandes, puis en faisant tourner l'une des plaques par rapport à l'autre dans leur plan commun avant l'opération de soudage par laser. Mais ceci ne résout que partiellement le problème de la qualité de la soudure obtenue car l'intervalle peut rester important. De plus, le dispositif d'alignement des bandes est complexe et coûteux à mettre en oeuvre.

Pour pallier à cet inconvénient on a imaginé de presser les deux bords des tôles l'un contre l'autre avec une force importante pendant le passage du faisceau laser de manière à s'assurer de l'absence de tout jeu entre les extrémités. Mais ceci provoque un bourrelet lorsque le métal devient pâteux et on retrouve le problème de la surépaisseur qu'il faut contrôler. De plus cette méthode ne peut être utilisée pour les très faibles épaisseurs. En effet, du fait des porte-à-faux des tôles par rapport aux bords des mors de maintien, une pression trop forte risquerait de provoquer un flambement des extrémités des tôles.

Pour éviter cette application sous pression des bords des tôles, il est nécessaire que les extrémités des tôles soit parfaitement rectilignes et parallèles. Divers dispositifs de guidage et de centrage des tôles permettent de réaliser un alignement et un positionnement aussi parfaits que possible, puis leurs extrémités sont découpées à l'aide d'une cisaille mécanique, qui peut être du type guillotine, ou même, à l'aide d'un faisceau laser. Après la séquence de préparation des extrémités des bandes les deux tôles sont approchées de manière à être jointives et on procède au soudage à l'aide du faisceau laser.

Le brevet US 4,854,493, par exemple, prévoit d'aligner les bords des bandes à l'aide de mécanismes de translation et de pivotement. Des dispositifs optiques permettent de contrôler l'espace restant entre les extrémités des deux tôles pour réaliser cet alignement. Des moyens de maintien magnétiques, dont le courant est contrôlé, permettent d'immobiliser les tôles les plus minces sans provoquer de déformations.

De tels dispositifs, parfois redondants, augmentent sensiblement le prix de l'équipement de soudage et leur mise en oeuvre dans une séquence complète conduit à un cycle de raccordement des bandes qui peut s'avérer assez long.

De plus, toutes ces opérations ont été effectuées avec une certaine imprécision, de même que les opérations de déplacement et de positionnement des tôles et des mors eux-mémes. Alors que l'on vise un jeu nul entre les extrémités des bandes, plus il y aura eu de manoeuvres ou d'opérations et plus l'incertitude sur la valeur du jeu obtenu lors de la mise bout à bout sera importante.

Il y a donc un risque, compte tenu de ces incertitudes et à moins d'un contrôle optique très fin, à ce que les extrémités des tôles soient mises bout à bout avec un jeu trop petit ou au contraire avec un jeu trop grand.

Cette incertitude peut atteindre plusieurs centièmes de millimètre et, si les mors sont déplacés de la valeur de leur course nominale sans se soucier de la tolérance avec laquelle ce déplacement sera exécuté, dans certains cas, les tôles seront pressées l'une sur l'autre de quelques centièmes de millimètre et dans d'autre cas, il subsistera un espace entre les extrémités des tôles du même ordre de grandeur. Ceci peut être extrêmement néfaste à la qualité de la soudure et de plus produire une qualité irrégulière si le résultat obtenu, en terme de jeu entre les extrémités des tôles , n'est pas toujours le même. Les tôles sont en général positionnées dans les mors pour avoir un léger porte à faux de quelques millimètres et un dépassement de quelques centièmes de millimètre sur la course de rapprochement risque déjà d'induire des pressions importantes, d'autant plus que l'échauffement des extrémités en contact produit une dilatation supplémentaire qui va encore augmenter cette pression.

Pour les tôles les plus épaisses ce phénomène se traduira par une surépaisseur dans le cordon de soudure. Pour les épaisseurs les plus faibles (0,15 à 0, 35 millimètre par exemple) ces pressions pourront provoquer une déformation des extrémités par flambement et détériorer la qualité de la soudure. En revanche, dans le cas d'une course de rapprochement insuffisante, le cordon de soudure risque d'être interrompu, en donnant une jonction de bande fragile.

La présente invention apporte une solution à l'ensemble des problèmes mentionnés ci-dessus en proposant un procédé permettant, dans une installation de traitement en ligne continue comportant un dispositif de soudage par faisceau laser et sans apport de matière, de contrôler l'épaisseur du cordon de soudure entre deux bandes successives, en tenant compte, notamment, de l'épaisseur des bandes à souder.

L'invention concerne donc, d'une façon générale, un procédé de soudage en bout, par faisceau laser ou autre, sans apport de matière, de deux bandes défilant successivement, suivant une direction longitudinale, dans une installation de traitement en ligne continue, dans lequel une extrémité aval, dans le sens de défilement, d'une première bande et une extrémité amont d'une seconde bande sont maintenues respectivement par deux organes de serrage à deux mors et soudées par passage d'un faisceau laser et sans apport de matière, procédé dans lequel, après serrage et immobilisation dans lesdits organes de serrage, lesdites extrémités sont découpées de façon à ménager deux bords rectilignes et parallèles, écartés chacun de l'extrémité correspondante des mors d'une dis tance de porte-à-faux, puis lesdits bords découpés sont mis en contact approché par déplacement relatif desdits organes de serrage l'un vers l'autre et la soudure est effectuée par passage du faisceau laser le long d'un plan de contact entre les bords.

Conformément à l'invention, les deux bords découpés étant écartés, après la coupe, d'une distance de référence, le rapprochement l'un vers l'autre des organes de serrage est commandé sur une course qui diffère de cette distance de référence d'un écart préréglé, calculé à l'avance en fonction de l'épaisseur des bandes à souder et en tenant compte du degré de précision du positionnement et de la coupe desdits bords, ledit écart préréglé étant compté positif ou négatif de façon à se retrancher ou s'ajouter à la distance de référence pour la détermination de la course de rapprochement, afin d'obtenir une position finale de soudage telle qu'il existe, entre les bords des deux bandes, un jeu effectif, positif ou négatif, de même signe que ledit écart préréglé.

Dans un premier mode de réalisation, le calcul préalable conduit à un écart préréglé négatif ou nul et à un jeu effectif de valeur négative ou nulle, le cordon de soudure ainsi obtenu ayant une épaisseur un peu supérieure à celle des deux bandes à souder, mais la surépaisseur étant contrôlée.

Dans une autre mise en oeuvre, l'étape de calcul conduit à un écart préréglé et, par conséquent, à un jeu effectif de valeur positive non nulle, ce qui permet d'obtenir un cordon de soudure d'épaisseur inférieure à celle d es deux tôles à souder.

De préférence, pour le calcul préalable de l'écart préréglé, la précision de découpe de chacune des extrémités des tôles, la tolérance de positionnement relatif des mors, et la dilatation des extrémités des tôles sont prises en compte, en plus de la somme des porte -à-faux, pour l'obtention, dans la position finale de soudage, d'un jeu effectif dont l'amplitude dépend de la valeur choisie pour l'écart préréglé mais qui reste compris dans un intervalle de tolérance permettant de contrôler l'épaisseur du cordon de soudure en fonction de l'épaisseur des tôles.

Habituellement, l'un des organes de serrage est fixe et l'autre est mobile pour réaliser le rapprochement des bords des deux bandes après la coupe.

Dans un mode de réalisation préférentiel, la position du mors mobile est obtenue par application d'une surface de référence liée audit mors mobile contre au moins une butée mécanique réglable pour l'obtention effective d'un jeu restant dans l' intervalle de tolérance souhaité.

Avantageusement, après l'étape de rapprochement dans la position finale de soudage, la valeur du jeu résiduel existant entre les deux bandes et la position du mors mobile est corrigée de cette valeur en modifiant la position des butées réglables de fin de course du mors mobile.

Dans un mode de réalisation, pour l'étape de rapprochement des mors dans la position finale de soudage, on mesure en un point la valeur du jeu résiduel existant entre les deux bandes et on corrige la position du mors mobile de cette valeur par une modification égale de la position des butées réglables de fin de course du mors mobile.

Dans un autre mode de réalisation, après rapprochement des mors dans la position finale de soudage, on mesure en deux points la valeur du jeu résiduel existant entre les bandes et on corrige la position du mors mobile de cette valeur par une modification différentielle de la position des butées réglable de fin de course du mors mobile .

Dans un premier mode de réalisation, l'étape de découpe des extrémités des tôles à souder se fait à l'aide d'une cisaille mécanique à lames.

En variante, l'étape de découpe des extrémités des tôles à souder se fait à l'aide d'un faisceau laser qui peut utiliser la même source laser que celle qui génère le faisceau de soudage.

D' autres caractéristiques avantageuses de l'invention apparaîtront dans la description suivante d'un mode de réalisation particulier donné à titre d'exemple non limitatif.
- La figure 1 représente schématiquement les positions relatives des mors de serrage d'une soudeuse laser pour la mise en oeuvre de l'invention.
- La figure 2 représente la formation du cordon de soudure.
- La figure 3 représente schématiquement le réglage de la course du mors mobile conformément au procédé de l'invention.

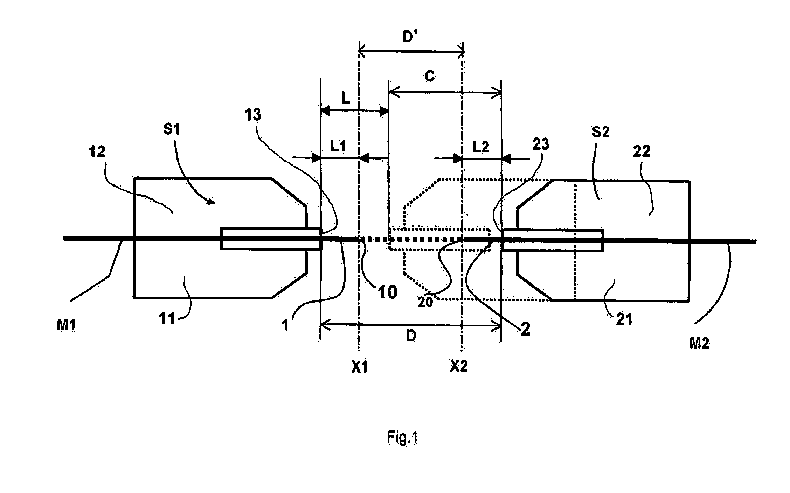

D'une manière générale, une machine de raccordement de bandes par soudage comporte deux organes de serrage des bandes, pouvant se rapprocher l'un de l'autre, des organes de coupe des extrémités des bandes et un dispositif de soudage non représentés. Sur la figure 1 on a représenté la disposition générale des parties constitutives d'une machine à souder au laser de façon à pouvoir décrire le procédé de l'invention. Les organes de serrage S1 et S2 appelés habituellement mors de serrage, comportent chacun deux mâchoires, respectivement une mâchoire inférieure 11, 21 placée au niveau du plan de défilement des bandes et une mâchoire supérieure 12, 22, mobile verticalement. Ces organes de serrage S1 et S2 sont représentés en position écartée à une distance D permettant le cisaillage des extrémités des deux bandes successives M1 et M2. Si le défilement des bandes a lieu dans le sens de S1 vers S2 on dit que S1 est le mors d'entrée et S2 le mors de sortie. Des organes de cisaillage peuvent être amenés dans les positions X1 et X2 pour la coupe des extrémités 10, 20 des bandes et ces positions de coupe sont à une distance respectivement L1 du bord 13 du mors S1 et L2 du bord 23 du mors S2. Lors du défilement de la fin de la première bobine on a arrêté la queue de la bande M2 un peu en amont du bord du mors S2, à une distance quelconque inférieure à D. Ensuite on a introduit un organe de cisaillage pour couper l'extrémité 20 de la bande dans la position X2, laissant un porte -à-faux L2 par rapport au bord 23 du mors S2. Ensuite la tête de la bande M1 issue de la bobine suivante est introduite dans la machine en la faisant dépasser du mors d'entrée S1 d'une longueur quelconque inférieure à D, puis l'on introduit un organe de cisaillage dans la position X1 de manière à couper l'extrémité 10 de la bande M1 en laissant un porte-à-faux L1 par rapport au bord du mors d'entrée. Tout ceci a fait l'objet de nombreuses descriptions et les principes ne sont d'ailleurs pas différents des autres types de soudeuses comme les soudeuse à molettes et il n'est pas utile de décrire plus en détail tous les dispositifs et leur fonctionnement. L'organe de découpe peut être unique, ou bien la machine peut disposer de deux organes de coupe différents. Il peut être constitué d'une cisaille mécanique, de préférence du genre guillotine, ou bien on peut aussi découper les bandes avec un faisceau laser. De manière préférentielle on utilisera cependant le même organe de coupe pour couper simultanément les extrémités des deux bandes afin de réaliser deux bords 10, 20 rigoureusement parallèles.

Le procédé selon l'invention va maintenant permettre de rapprocher bout à bout les deux extrémités des bandes à raccorder et les souder au laser tout en contrôlant l'épaisseur du cordon de soudure réalisé. Pour cela, au moins un des deux mors est mobile et peut se rapprocher de l'autre. Par exemple, d'une manière courante le mors de sortie S2 est mobile. Il est monté dans une structure non représentée dans la quelle il est guidé en translation, en restant parallèle à lui même et s on mouvement est parallèle à l'axe de défilement de la bande. Pour cela il peut se déplacer sous l'action de deux vérins placés de part et d'autre de chaque côté, à l'extérieur de la zone de défilement de la bande. Ces vérins sont équipés de capteurs de position qui permettent de contrôler avec exactitude la course du mors mobile.

Cependant, dans un mode de réalisation selon l'invention, les vérins poussent le mors mobile sur une butée mécanique réglable. Cette butée réglable va donc déterminer avec précision la course exacte C que va effectuer le mors mobile. De manière préférentielle on installera une butée de chaque côté du mors mobile pour délimiter la course de chaque vérin de commande du mouvement. Ces butées réglables peuvent avantageusement être du type à coins et le réglage se fait par déplacement des coins l'un par rapport à l'autre. Un moto réducteur et un dispositif de vis et d'écrou permettent de commander le déplacement des coins. Un capteur du type générateur d'impulsions monté sur l'arbre du moteur permet de régler la position des coins et donc la butée avec une grande précision. Le même moteur peut commander avantageusement les deux butées installées de chaque côté de manière parfaitement synchrone. En fin de course une surface de référence solidaire du mors mobile est appliquée sur la butée mécanique.

Dans un mode de réalisation perfectionné de l'invention on peut aussi imaginer que les deux butées réglables, par exemple le dispositif à coins, disposent chacune de leur moyen de réglage. Un générateur d'impulsions est alors installé sur chacun des deux moteurs de commande, donnant ainsi la possibilité d'une action différentielle. Il est ainsi possible, en cas de besoin, par réglage de chaque butée de manière indépendante, de corriger un défaut de coupe dissymétrique constaté, comme un défaut de parallélisme des extrémités des bandes.

D est la distance initiale entre les extrémités 13, 23 des deux mors lorsqu'ils sont dans la position écartée dans laquelle on a introduit puis coupé les extrémités des deux bandes, les deux bords cisaillés 10, 20 étant rigoureusement parallèles et écartés d'une distance de référence D'=D -(L1+L2).

La Course C du mors mobile S2 devrait être, théoriquement, égale à cette distance de référence D' afin de mettre simplement en contact les deux bords cisaillés 10, 20.

Cependant, selon l'invention, la course réelle de rapprochement C sera légèrement différente de la distance de référence D' afin de contrôler l'épaisseur du cordon de soudure, cette différence D' -C étant égale à un écart préréglée, positif ou négatif, calculé à l'avance en fonction de l'épaisseur des tôles et en tenant compte du degré de précision de la coupe des bords et du positionnement des mors.

De la sorte, après rapprochement des mors S1, S2 sur la course C ainsi calculée, la distance effective L entre les mors déterminera, entre les bords 10, 20 des deux tôles, un jeu effectif J=D' -C, ayant le même signe, positif ou négatif, que l' écart préréglé e et se trouvant, par rapport à celui -ci, dans un intervalle de tolérance permettant de contrôler l' épaisseur du cordon de soudure en fonction de l'épaisseur des tôles.

Un jeu J positif correspond à un léger espacement entre les bords 10 et 20 des deux bandes, alors qu'un jeu négatif correspond à une mise en compression des bords puisque, dans ce cas, la course de rapprochement C est supérieure à la distance de référence D' correspondant théoriquement au contact des bandes bord à bord.

En pratique, L1 et L2 étant les deux porte -à-faux prévus en fonction de l'épaisseur des tôles à souder, la course de rapprochement C va être préréglée par la butée de manière à obtenir une distance finale entre les extrémités 13, 23 des mors L= D - C telle qu'un jeu effectif, positif ou négatif J = L -(L1+ L2) soit obtenu, ce jeu effectif correspondant à l' écart calculé selon l'épaisseur des tôles à souder de façon à assurer une légère sous épaisseur pour les tôles épaisses et une légère surépaisseur pour les tôles les plus fines.

En effet, comme il a été dit plus haut, se lon l'épaisseur des tôles on peut avoir avantage à viser un jeu effectif positif, ou bien un jeu effectif nul ou négatif.

Par exemple, on peut considérer que dans un dispositif classique de coupe avec une cisaille mécanique, par exemple du type guillotine, la précision obtenue est de ± 0,02 millimètre. Par ailleurs, dans une machine selon l'invention la course du mors mobile est contrôlée par une butée mécanique que l'on peut régler pour avoir une précision de +0/+0,02 millimètre. Si on utilise un dispositif de coupe par fusion à l'aide d'un faisceau laser on peut considérer une précision de coupe plus grande, par exemple de ± 0,01 millimètre.

Lors de l'échauffement par le faisceau laser qui provoque localement la fusion du métal, la température de toute la zone en porte à faux augmente, provoquant une dilatation de l'extrémité de la bande. Le porte à faux va donc légèrement augmenter dans la zone chauffée par le laser en rapprochant les deux extrémités des bandes.

On a donc calculé que pour des tôles de 6 millimètres d'épaisseur, positionnées entre les mors de façon à laisser un porte -à-faux d'environ 3 mm pour chaque extrémité, la dilatation serait d'environ 8,8 micromètres pour chaque bord. Cette valeur étant calculée par défaut, le rapprochement des deux extrémités est de 0,02 à 0,025 mm.

Pour des tôles de fine épaisseur, par exemple 0,2 mm, avec un porte -à-faux de 1,5 mm, la dilatation lors du soudage serait de 5,7 micromètres par bord, soit un rapprochement total des extrémités de 0,01 à 0,015 mm. Ces valeurs dues à la dilatation peuvent être considérées comme une course supplémentaire δ du mors mobile vers le mors fixe.

Il est donc essentiel, pour déterminer la course du mors mobile, de prévoir un écart calculé avec précision en fonction de l'épaisseur des tôles à souder et selon leur destination ultérieure.

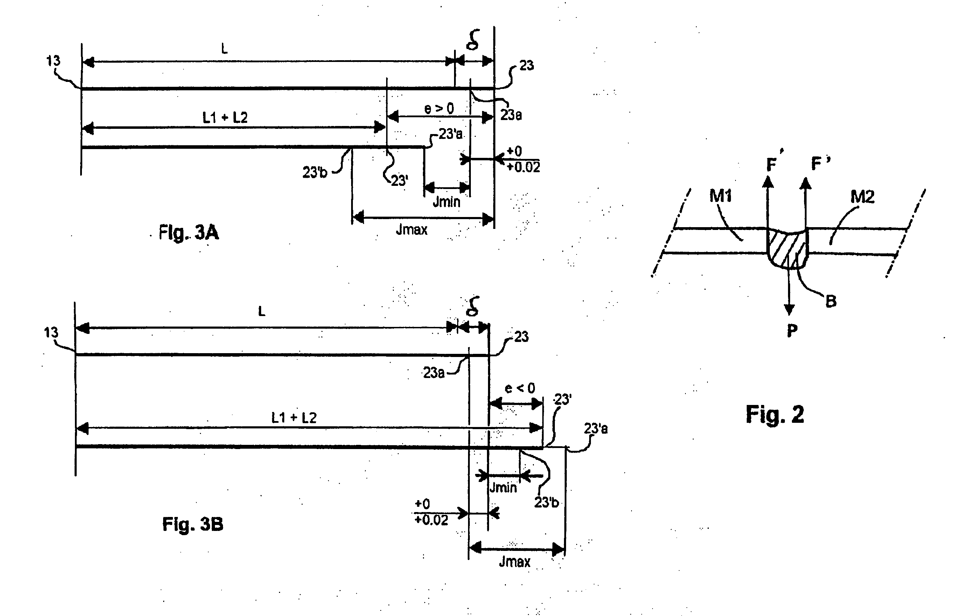

La figure 2 montre schématiquement le comportement du cordon de soudure pour des épaisseurs de tôle relativement importantes (plusieurs millimètres).

Sous l'effet de la chaleur dégagée par le faisceau laser dans les deux extrémités des bandes M1 et M2, il se forme un bain de métal liquide B qui est en équilibre sous l'action des forces de tension superficielles F et F'. En effet ce bain est soumis d'une part à l'action de la gravité : P = mg et, d'autre part, aux forces de tension superficielle qui prennent naissance sur les deux faces des extrémités des bandes. Elles ont pour valeur F = ∬ tds, t étant la valeur de la tension superficielle et ds l'élément de surface.

Les phénomènes de tension superficielle des métaux et particulièrement de l'acier sont bien connus et ont été l'objet de nombreuses études sur la formation des ménisques, par exemple dans les procédés de coulée continue de l'acier.

Dans le cas de tôles épaisses, l'élément de surface est important et les forces supportant le bain B de métal seront donc relativement grandes. Pour réaliser le cordon de soudure le mors mobile sera positionné dans un intervalle de tolérance positif, ce qui aura pour effet de réaliser un cordon de soudure légèrement en creux, au moins sur la face supérieure des bandes M1 et M2 comme le montre la figure 2.

En revanche, dans le cas de tôles très minces, dont l'épaisseur est de l'ordre de quelques dixièmes de millimètre, l'élément de surface susceptible de générer des tensions superficielles porteuses du bain liquide B est très réduit. Il faut donc réduire le poids du bain en réduisant la distance entre les extrémités des deux bandes M1 et M2. Pour cela, le mors mobile sera positionné dans un intervalle de tolérance négatif ou nul.

Ces deux cas de positionnement seront illustrés par les figures 3A et 3B qui montrent schématiquement les positions relatives des extrémités 13 du mors fixe 1 et 23 du mors mobile 2, après rapprochement en position de soudage.

### Exemple 1 :

La figure 3A illustre le cas du soudage en bout de deux tôles dont l'épaisseur est de plusieurs millimètres, dans une machine à souder équipée de cisailles mécaniques du type guillotine. Ces tôles seront réduites ultérieurement en épaisseur dans un laminoir à froid et il est donc im portant que le cordon de soudure ne présente aucune surépaisseur. Par ailleurs, et compte tenu de l'épaisseur des tôles, le bain de métal liquide sera suffisamment alimenté et les faces en regard présentent une surface suffisante pour qu'il soit soutenu par les forces de tension superficielles.

Comme il a été dit auparavant la précision de coupe obtenue par des cisailles mécaniques est de ± 0,02 mm. Le positionnement du mors mobile sur une butée mécanique est obtenu avec un intervalle de tolérance de +0/+ 0,02 mm et la dilatation de la partie en porte -à-faux lors du soudage est de δ = 0,02 à 0,025 mm.

Compte tenu des distances de porte -à-faux L1 et L2, pour réaliser un simple contact entre les bords de tôles, l'extrémité 23' du mors mobile devrait être écartée de l'extrémité 13 du mors fixe de la distance L1 + L2 mais, en raison de l'incertitude de ± 0,02 mm sur la coupe de chacun des bords, cette distance peut être augmentée ou diminuée de 0,04 mm, la position théorique 23' de l'extrémité du mors mobile se trouvant alors entre les points 23'a et 23'b sur la Figure 3A.

Selon l'invention, la course C du mors mobile est déterminée de façon que la distance L entre les extrémités des mors diffère de la somme L1 + L2 d'un écart préréglée qui est positif dans le cas de tôles relativement épaisses.

Mais il faut tenir compte également de la dilatation δ qui augmente les porte-à-faux L1 et L2 et de la tolérance de positionnement de +0/+0,02 mm.

L'écart préréglé e entre la position théorique 23' de l'extrémité du mors mobile et la position effective 23 pourra donc être diminué de cette tolérance, soit 0,02 mm.

Dans ce cas et selon l'invention, on positionne la butée réglable de façon à ce que le mors mobile fasse une course C = D - L, telle que L soit supérieure à la somme des porte-à-faux avec la relation : L+δ = L1+L2 + e .

Comme le montre la figure 3A, l'extrémité 23 du mors mobile sera alors positionnée dans un intervalle de tolérance conduisant à un jeu effectif entre les bords 10, 20 des tôles, compris entre un jeu minimal Jmin correspondant à la distance entre les points 23'a et 23a et un jeu maximal Jmax correspondant à la distance entre les points 23'b et 23.

Avec les valeurs numériques indiquées plus haut pour les épaisseurs des tôles et les tolérances, on peut avantageusement choisir un écart préréglé positif e = + 0,1mm conduisant à un jeu effectif positif compris entre Jmin = 0,04 millimètre et Jmax = 0,14 millimètre, ce qui permet dans tous les cas, d'obtenir un cordon de soudure légèrement en creux.

On pourra utiliser ce type de réglage, par exemple pour le raccordement de bobines d'acier laminées à chaud et dont l'épaisseur est comprise entre 1 et quelques millimètres. De telles bobines sont habituellement raccordées par soudage en bout par étincelage et le cordon de soudure doit alors être raboté car ces bobines sont en général laminées à froid pour réduire leur épaisseur et cette opération ne supporte aucune surépaisseur.

Le procédé de l'invention permet de réaliser une soudure au laser beaucoup plus fiable, car elle ne nécessite pas de rabotage, tout en obtenant un cordon de soudure d'épaisseur légèrement inférieure à celle des tôles à raccorder.

### Exemple 2 :

La figure 3B illustre au contraire le cas de tôles très minces, dont l'épaisseur peut être seulement de quelques dixièmes de millimètre, voire de un dixième de millimètre.

Dans cet exemple, le raccordement de deux tôles est réalisé par soudage en bout par faisceau laser dans une machine qui permet aussi de couper les extrémités des bandes par fusion et séparation à l'aide d'un faisceau laser.

Dans une telle machine la précision de découpe est estimée à ± 0,01 millimètre, la précision de positionnement du mors mobile à l'aide d'une butée mécanique réglable est la même, c'est à dire +0/+ 0,02 millimètre. On a estimé que dans le cas d'une tôle de 0,2 millimètre d'épaisseur, les extrémités des bandes M1 et M2 seraient maintenues dans les mors S1 et S2 avec des porte - à-faux d'environ 1,5 millimètre pour chacun, et dans ce cas la dilatation totale due au chauffage du faisceau laser serait de 0,01 à 0,015 millimètre.

Comme dans le cas précédent, la position théorique 23' de l'extrémité du mors mobile 2 correspondant à un simple contact des bords est comprise entre les points 23'a, 23'b écartés de 0,04 mm si l'incertitude sur la coupe est de ± 0,01 mm.

Compte tenu de la dilatation δ, après rapprochement des mors, la position effective 23 de l'extrémité du mors mobile est écartée de l'extrémité 13 du mors fixe de la distance L + δ et, dans le cas de tôles minces, la butée réglable est positionnée de façon à ce que le mors mobile fasse une course C = D - L un peu supérieure à la distance de référence D', l'écart préréglé e étant, dans ce cas, négatif.

Compte tenu de la tolérance de positionnement du mors mobile, comme le montre la figure 3B, l'extrémité 23 de celui -ci sera alors positionnée dans un intervalle de tolérance conduisant à un jeu effectif négatif, c'est -à-dire à un serrage des tôles, compris entre un jeu minimal Jmin correspondant à la distance entre les points 23 et 23'b et un jeu maximal Jmax correspondant à la distance entre les points 23a et 23'a.

Avec les valeurs numériques indiquées plus haut pour les épaisseurs et les tolérances, on peut avantageusement choisir un écart préréglé négatif e = - 0,03 mm conduisant à un jeu effectif négatif compris entre Jmin = -0,01 mm et Jmax = -0,07 mm.

Dans ce cas particulier, avec le réglage choisi de la course dans l'intervalle de tolérance, c'est la dilatation δ qui maintiendra les deux tôles en contact l'une vers l'autre, avec une légère surpression qui sera assez faible pour ne pas provoquer un flambement, mais qui sera suffisante pour le maintien du bain de métal liquide B et réaliser une soudure de qualité dans laquelle il n'y aura pas d'interruption du cordon de soudure.

Toutefois, selon les épaisseurs des bandes M1 et M2 on pourra avoir une légère surépaisseur, et l'on pourra alors utiliser ce type de réglage pour les tôles qui ne subissent pas de laminage à froid.

De manière classique, dans une ligne de galvanisation par exemple, qui peut être équipée d'un laminoir skin-pass et d'une planeuse, le soudage est réalisé par une soudeuse de type à molettes et qu'une surépaisseur de l'ordre de 10% de l'épaisseur de la bande est parfaitement acceptée. Grâce au procédé de l'invention une soudure de ce type est réalisée de manière parfaitement fiable et avec une surépaisseur réduite à une valeur quasiment nulle.

Ainsi, l' invention permet, par le choix d' un écart préréglé positif ou négatif, d' obtenir, compte tenu des tolérances, un jeu effectif positif ou négatif adapté à l' épaisseur des tôles afin de contrôler l' épaisseur du cordon de soudure.

Dans certains cas, cependant, on pourra juger préférable de privilégier l' obtention d'un jeu effectif toujours positif, afin d'en permettre la mesure. Dans un mode de réalisation plus perfectionné, le procédé pourra alors être complété par une mesure de l'espace résiduel subsistant entre les extrémités des bandes M1 et M2 après le positionnement du mors mobile S2 et par une modification du réglage de la butée.

De la sorte, si le traitement réalisé en aval exige une qualité de la soudure très grande, qui ne peut être garantie par l'intervalle de tolérance, on peut alors utiliser le procédé de l'invention comme un préréglage et procéder ensuite à une mesure du jeu effectif résiduel entre les deux extrémités des bandes M1 et M2 afin de corriger la position du mors mobile S2 en déplaçant la butée mécanique réglable de la valeur mesurée.

A cet effet, dans un mode de réalisation préférentiel, on peut utiliser une butée réglable par un dispositif à coins, sur laquelle le mors mobile est appliqué en permanence par les vérins et, une fois la course effectuée, le dispositif à coins permet de modifier le réglage en charge. Il ne s'agit en effet pas d'une nouvelle course mais d'une correction de quelques centièmes de millimètre. Pour mesurer le jeu effectif entre les deux bords 10 et 20 des tôles après positionnement, on peut utiliser un système optique tel que décrit dans le brevet US 4,854,493 ou tout autre dispositif approprié, magnétique, pneumatique ou capacitif.

Dans un mode de réalisation particulier où les deux butées peuvent être réglées indépendamment l'une de l'autre, on peut aussi envisager de mesurer le jeu effectif entre les deux tôles en deux points de manière à pouvoir compenser un défaut de parallélisme, dans le cas où l'on craint un défaut de coupe, par exemple dans le cas d'une machine équipée initialement de deux cisailles mécaniques pouvant avoir un alignement différent.

Enfin dans un mode particulièrement avantageux de réalisation de l'invention, la découpe des extrémités 1 et 2 des bandes M1 et M2 se fait par fusion séparation à l'aide d'un faisceau laser et on utilise la même source laser pour les deux faisceaux. Dans ce cas on utilise des chemins optique de guidage et de concentration des faisceaux différents, ce qui permet de déplacer le faisceau de coupe des extrémités selon le plan X1 pour la bande M1 et selon le plan X2 pour la bande M2, et de pouvoir déplacer le faisceau de soudage selon le plan X1 qui est alors celui dans lequel on a placé bout à bout les extrémités des deux bandes à raccorder.

La description de tous ces modes de réalisation n'est pas limitative de l'invention, on pourra utiliser une machine dont le guidage et la commande du mors mobile seront différents, de même que la disposition et le réglage des butées. On peut aussi imaginer un contrôle direct du mors mobile par des capteurs de déplacement et un asservissement électronique sans sortir du cadre de l'invention.

Les références et les repères donnés sur les figures ne sont donnés que pour illustrer la description et ne sont nullement limitatifs de la portée de l'invention.

## Revendications

1. Procédé de soudage en bout, par faisceau laser ou autre et sans apport de matière, de deux bandes défilant successivement suivant une direction longitudinale, dans une installation de traitement en ligne continue,
dans lequel une extrémité aval, dans le sens de défilement, d'une première bande (M1) et une extrémité amont d'une seconde bande (M2) sont maintenues respectivement par deux organes de serrage à deux mors (S1, S2) et soudées par passage d'un faisceau laser et sans apport de matière, procédé dans lequel après serrage et immobilisation dans lesdits organes de serrage (S1, S2), lesdites extrémités (1, 2) sont découpées de façon à ménager deux bords rectilignes et parallèles (10, 20) écartés chacun de l'extrémité correspondant des mors d'une distance de porte -à-faux (L1, L2), puis lesdits bords découpés sont mis en contact par déplacement relatif desdits organes de serrage l'un vers l'autre et la soudure est effectuée par passage du faisceau laser le long d'un plan de contact entre les bords (10, 20), **caractérisé par le fait que** les deux bords découpés (10, 20) étant écartés, après la coupe, d'une distance de référence (D'), le rapprochement l'un vers l'autre des organes de serrage est commandé sur une course (C), qui diffère de ladite distance de référence (D') d'un écart préréglé (e), calculé à l'avance en fonction de l'épaisseur des bandes à souder et en tenant compte du degré de précision du positionnement et de la coupe desdits bords (10, 20), ledit écart préréglé (e) étant compté positif ou négatif de façon à se retrancher ou s'ajouter à la distance de référence (D') pour la détermination de la course de rapprochement (C), afin d'obtenir une position finale de soudage telle qu'il existe, entre les bords (10, 20) des deux bandes, un jeu effectif (J), positif ou négatif, de même signe que ledit écart préréglé (e).

2. Procédé de soudage en bout de deux bandes au moyen d'un faisceau laser, selon la revendication 1, **caractérisé en ce que** l'écart préréglé (e) a une valeur négative ainsi que le jeu effectif (J), de façon à obtenir un cordon de soudure d'épaisseur supérieure à celle des deux tôles à souder.

3. Procédé de soudage obtenu par le soudage en bout de deux bandes métalliques (M1, M2) au moyen d'un faisceau laser, selon la revendication 1, **caractérisé en ce que** l'écart préréglé (e) a une valeur positive non nulle ainsi que le jeu effectif (J), de façon à obtenir un cordon de soudure d'épaisseur inférieure à celle des deux bandes à souder.

4. Procédé de soudage en bout de deux bandes métalliques (M1, M2) au moyen d'un faisceau laser selon l'une des revendications précédentes, **caractérisé en ce que**, pour le calcul de l'écart préréglé (e), on prend en compte la précision de découpe de chacune des extrémités des tôles, la tolérance de positionnement du mors mobile, et la dilatation des extrémités des tôles (10,20) pour l'obtention, dans la position finale de soudage, d'un jeu effectif (J) dont l'amplitude dépend de la valeur choisie pour l'écart préréglé (e) mais reste compris dans un intervalle de tolérance permettant de contrôler l'épaisseur du cordon de soudure en fonction de l'épaisseur des bandes.

5. Procédé de soudage selon l'une des revendications précédentes, **caractérisé en ce que** la position finale (X1) du mors mobile (S2) est obtenue par l'application d'une surface de référence liée à celui-ci contre au moins une butée mécanique réglable pour l'obtention du jeu effectif.

6. Procédé de soudage selon la revendication 5, **caractérisé en ce qu'**après le positionnement du mors mobile (S2) dans la position finale de soudage (X1), on mesure la valeur du jeu effectif existant entre les deux tôles et on corrige la position du mors mobile de cette valeur en modifiant la position des butées réglables de fin de course du mors mobile (S2).

7. Procédé de soudage selon la revendication 6, **caractérisé en ce qu'**après le positionnement du mors mobile (S2) dans la position finale de soudage (X1), on mesure en un point la valeur du jeu effectif existant entre les deux bandes et on corrige la position du mors mobile (S2) de cette valeur par une modification égale de la position des butées réglables de fin de course du mors mobile (S2).

8. Procédé de soudage selon la revendication 6, **caractérisé en ce qu'**après le positionnement du mors mobile (S2) dans la position finale de soudage (X1), on mesure en deux points la valeur du jeu effectif existant entre les deux bandes et on corrige la position du mors mobile (S2) de cette valeur par une modification différentielle de la position des butées réglables de fin de course du mors mobile (S2).

9. Procédé de soudage selon l'une des revendications précédentes, **caractérisé en ce que** la découpe des extrémités des bandes à souder se fait à l'aide d'une cisaille mécanique à lames.

10. Procédé de soudage selon l'une quelconque des revendications 1 à 8, **caractérisé en ce que** la découpe des extrémités des bandes à souder se fait à l'aide d'un faisceau laser.

11. Procédé selon la revendication 10, **caractérisé en ce que** la découpe des extrémités des tôles à souder se fait à l'aide d'un faisceau laser utilisant la même source que celle utilisée pour générer le faisceau de soudage.

## Claims

1. Butt welding method, by means of a laser beam or equivalent and without using filler material, of two bands running successively along a longitudinal direction, in a continuous line processing installation, wherein, in the running direction, a downstream end of a first band (M1) and an upstream end of a second band (M2) are held respectively by two double-jaw clamping means (S1, S2) and welded by passing said laser beam and without using filler material, a method wherein after clamping and immobilisation in said clamping means (S1, S2), said ends (1, 2) are cut so as to provide two rectilinear and parallel edges (10, 20), each spaced away from the corresponding end of the jaws by an overhang distance (L1, L2), then said cut edges are contacted by relative displacement of said clamping means towards one another and welding is carried out by passing the laser beam along a contact plane between the edges (10, 20), **characterised in that** both cut edges (10, 20) are spaced apart after cutting by a reference distance (D'), the clamping means are brought towards one another controlled over a travel distance (C) which differs from said reference distance (D') by a preset clearance (e), calculated beforehand in relation to the thickness of the bands to be welded and while taking into account the degree of accuracy of the positioning and of the cut of said edges (10, 20), said preset clearance (e) being counted as positive or negative in order to be subtracted or added to the reference distance (D') for determining the travel distance (C) for bringing the clamping means closer, in order to obtain a final welding position such that between the edges (10, 20) of both bands, an actual play (J) exists having the same sign, positive or negative, as said preset clearance (e).

2. Method for butt welding two bands by means of a laser beam according to claim 1, **characterised in that** the preset clearance (e) has a negative value as well as the actual play (J) so as to obtain a welding bead thicker than that of each band to be welded.

3. Welding method obtained by butt welding two metal strips (M1, M2) by means of a laser beam according to claim 1, **characterised in that** the preset clearance (e) has a non-zero positive value as well as the actual play (J) so as to obtain a welding bead with a thickness less than that of each band to be welded.

4. Method for butt welding two metal strips (M1, M2) by means of a laser beam according to one of the preceding claims, **characterised in that** for calculating the preset clearance (e), the cutting accuracy of each of the band ends, the positioning tolerance of the mobile jaw and the expansion of the band ends (10, 20) are taken into account, to obtain, in the final welding position, an actual play (J), the amplitude of which depends on the chosen value of the preset clearance (e) but remains included within a tolerance interval allowing the thickness of the welding bead to be controlled as a function of the thickness of the bands.

5. Welding method according to one of the preceding claims, **characterised in that** the final welding position (X1) of the mobile jaw (S2) is obtained by applying a reference surface associated therewith against at least one adjustable mechanical stop for obtaining the actual play.

6. Welding method according to claim 5, **characterised in that** after placing the mobile jaw (S2) in the final welding position (X1, the value of the actual play existing between both bands is measured and the position of the mobile jaw is corrected by said value by modifying the position of the stops adjusting the limit of travel of the mobile jaw (S2).

7. Welding method according to claim 6, **characterised in that** after placing the mobile jaw (S2) in the final welding position (X1), the value of the actual play existing between both bands is measured at one point and the position of the mobile jaw (S2) is corrected by said value by an equal modification of the position of the stops adjusting the limit of travel of the mobile jaw (S2).

8. Welding method according to claim 6, **characterised in that** after placing the mobile jaw (S2) in the final welding position (X1), the value of the actual play existing between both bands is measured at two points and the position of the mobile jaw (S2) is corrected by said value by a differential modification of the position of the stops adjusting the limit of travel of the mobile jaw (S2).

9. Welding method according to one of the preceding claims, **characterised in that** the step of cutting the ends of the bands to be welded is performed using a blade shearing machine.

10. Welding method according to one of claims 1 to 8, **characterised in that** the step of cutting the ends of the bands to be welded is performed using a laser beam.

11. Method according to claim 10, **characterised in that** the ends of the bands to be welded are cut by means of a laser beam using the same source as that used to generate the welding beam.

## Patentansprüche

1. Verfahren zum stumpfen Verschweißen mittels Laserstrahl oder einem anderen Verfahren und ohne Werkstoffzuführung von zwei hintereinander in Längsrichtung in einer kontinuierlichen Verarbeitungsanlage durchlaufenden Bändern, bei dem ein in Ablaufrichtung gesehen nachlaufendes Ende eines ersten Bandes (M1) und ein vorlaufendes Ende eines zweiten Bandes (M2) jeweils von zwei Klemmeinrichtungen mit zwei Spannbacken (S1 S2) gehalten und durch Entlangführen eines Laserstrahls ohne Werkstoffzuführung verschweißt werden, wobei die Enden (1, 2) nach dem Einspannen und Festhalten in diesen Klemmeinrichtungen (S1 S2) so beschnitten werden, dass zwei gerade und parallele Kanten (10, 20) gebildet werden, die vom entsprechenden Ende der Spannbacken jeweils um einen Überstand (L1, L2) beabstandet sind, woraufhin die beschnittenen Kanten durch relatives Bewegen der Klemmeinrichtungen zueinander in Kontakt gebracht werden und durch Führen des Laserstrahls entlang einer Kontaktebene zwischen den Kanten (10, 20) verschweißt werden, **dadurch gekennzeichnet, dass**, da die beiden beschnittenen Kanten (10, 20) nach dem Schneiden um eine Referenzdistanz (D') voneinander beabstandet sind, das Aufeinanderzubewegen der Klemmeinrichtungen über einen Weg (C) gesteuert wird, der von dieser Referenzdistanz (D') um einen voreingestellten Abstand (e) abweicht, der im Voraus in Abhängigkeit von der Dicke der zu verschweißenden Bänder und unter Berücksichtigung des Genauigkeitsgrades der Positionierung und des Beschneidens der Kanten (10, 20) berechnet wird, wobei dieser voreingestellte Abstand (e) positiv oder negativ gezählt wird, so dass er bei der Bestimmung des Annäherungsweges (C) von der Referenzdistanz (D') abgezogen oder zu dieser hinzuaddiert wird, um eine endgültige Schweißposition zu erhalten, in der zwischen den Kanten (10, 20) der beiden Bänder ein tatsächlicher positiver oder negativer Spalt (J) mit demselben Vorzeichen wie der voreingestellte Abstand (e) liegt.

2. Verfahren zum stumpfen Verschweißen von zwei Metallbändern mittels eines Laserstrahls nach Anspruch 1, **dadurch gekennzeichnet, dass** der voreingestellte Abstand (e) sowie der tatsächliche Spalt (J) einen negativen Wert haben, so dass eine Schweißnaht erhalten wird, deren Dicke größer als die der beiden zu verschweißenden Bleche ist.

3. Schweißverfahren durch stumpfes Verschweißen von zwei Metallbändern (M1, M2) mittels eines Laserstrahls nach Anspruch 1, **dadurch gekennzeichnet, dass** der voreingestellte Abstand (e) sowie der tatsächliche Spalt (J) einen positiven Wert ungleich Null haben, so dass eine Schweißnaht erhalten wird, deren Dicke geringer als die der beiden zu verschweißenden Bänder ist.

4. Verfahren zum stumpfen Verschweißen von zwei Metallbändern (M1, M2) mittels eines Laserstrahls nach einem der vorangehenden Ansprüche, **dadurch gekennzeichnet, dass** bei der Berechnung des voreingestellten Abstands (e) die Genauigkeit des Beschneidens jedes der Blechenden, die Positionierungstoleranz der beweglichen Spannbacke und die Ausdehnung der Blechenden (10, 20) berücksichtigt werden, um in der endgültigen Schweißposition einen tatsächlichen Spalt (J) zu erhalten, dessen Amplitude von dem für den voreingestellten Abstand (e) gewählten Wert abhängt, dabei jedoch weiterhin in einem Toleranzbereich liegt, der es ermöglicht, die Dicke der Schweißnaht in Abhängigkeit von der Dicke der Bänder zu kontrollieren.

5. Schweißverfahren nach einem der vorangehenden Ansprüche,
**dadurch gekennzeichnet, dass** die endgültige Position (X1) der beweglichen Spannbacke (S2) durch Anlegen einer mit dieser verbundenen Referenzfläche gegen mindestens einen verstellbaren mechanischen Anschlag erhalten wird, um so den tatsächlichen Spalt zu erhalten.

6. Schweißverfahren nach Anspruch 5, **dadurch gekennzeichnet, dass** nach dem Positionieren der beweglichen Spannbacke (S2) in der endgültigen Schweißposition (X1) der Wert des tatsächlich zwischen den beiden Blechen bestehenden Spalts gemessen wird und die Position der beweglichen Spannbacke um diesen Wert korrigiert wird, indem die Position der verstellbaren Endanschläge der beweglichen Spannbacke (S2) geändert wird.

7. Schweißverfahren nach Anspruch 6, **dadurch gekennzeichnet, dass** nach dem Positionieren der beweglichen Spannbacke (S2) in der endgültigen Schweißposition (X1) der Wert des tatsächlich zwischen den beiden Blechen bestehenden Spalts in einem Punkt gemessen wird und die Position der beweglichen Spannbacke (S2) durch eine ebenso große Änderung der Position der verstellbaren Endanschläge der beweglichen Spannbacke (S2) um diesen Wert korrigiert wird.

8. Schweißverfahren nach Anspruch 6, **dadurch gekennzeichnet, dass** nach dem Positionieren der beweglichen Spannbacke (S2) in der endgültigen Schweißposition (X1) der Wert des tatsächlich zwischen den beiden Bändern bestehenden Spalts in zwei Punkten gemessen wird und die Position der beweglichen Spannbacke (S2) durch eine differenzielle Änderung der Position der verstellbaren Endanschläge der beweglichen Spannbacke (S2) um diesen Wert korrigiert wird.

9. Schweißverfahren nach einem der vorangehenden Ansprüche, **dadurch gekennzeichnet, dass** die Enden der zu verschweißenden Bänder mit Hilfe einer mechanischen Schere mit Messern beschnitten werden.

10. Schweißverfahren nach einem der Ansprüche 1 bis 8, **dadurch gekennzeichnet, dass** die Enden der zu verschweißenden Bänder mit Hilfe eines Laserstrahls beschnitten werden.

11. Verfahren nach Anspruch 10, **dadurch gekennzeichnet, dass** die Enden der zu verschweißenden Bleche mit Hilfe eines Laserstrahls beschnitten werden, der die gleiche Quelle verwendet, die auch zum Erzeugen des Schweißstrahls verwendet wird.
